# EUROPEAN PATENT SPECIFICATION

(11) **EP 0 947 729 B1**
(45) Date of publication and mention of the grant of the patent: **07.11.2001**
(21) Application number: 98830201.4
(22) Date of filing: 02.04.1998
(51) Int. Cl.: F16H 1/16

(54) **Worm-helical gear reducer**
Schneckenreduktionsgetriebe
Réducteur à vis sans fin et engrenage hélicoidal

(43) Date of publication of application: 06.10.1999
(73) Proprietor: BONFIGLIOLI RIDUTTORI S.p.A., I-40012 Lippo di Calderara di Reno (IT)
(72) Inventor: Cognigni, Enzo, 40129 Bologna (IT); Depietri, Pietro, 40141 Bologna (IT)
(74) Representative: Franzolin, Luigi

(56) References cited:
- US-A- 4 185 514

## Description

The present invention relates to a worm-helical gear reducer.

As is known, motion may be transmitted between oblique perpendicular axes using a worm-helical gear coupling. The worm comprises a shaft with a dead hole at one end for receiving a mechanical element by which to connect the worm to a drive unit; and the dead hole is formed in a series of diameters to IEC Standard 72, and is normally keyed to the mechanical element of the drive unit.

A major drawback of this type of reducer is that the diameter of the mechanical element of the drive unit may not correspond with any of the standard diameters produced, thus preventing the use of normally marketed standard reducers.

Moreover, production is currently determined by two parameters: the reduction ratio required; and the diameter of the dead hole for connection to the mechanical element of the drive unit. Which obviously means stocking a large number of different reducers to meet a wide range of different requirements.

A worm-helical gear reducer which partially overcomes the aforementioned drawback is disclosed in US-A-4 185 514 (according to the preamble of claim 1), wherein a very complicated adapter is shown comprising a substantially cylindrical housing provided with a circular flange which has to be coupled to a further flange fitted to a container of the gear reducer. Finally, the housing supports the adapting element by means of two spaced-apart bearings.

It is an object of the present invention to provide a worm-helical gear reducer designed to overcome the aforementioned drawbacks.

According to the present invention, there is provided a worm-helical gear reducer comprising a worm having a first shaft, and a helical gear fitted to a second shaft; said worm meshing with said helical gear; said first shaft having a dead hole at a first end; and the worm being connectable at said dead hole to a mechanical element; said dead hole being a single reference hole for a given series of diameters of said mechanical element; and an adapting element being interposed between said dead hole and said mechanical element, the worm-helical gear reducer being characterized in that the adapting element is housed at least partially inside said dead hole and has a trough hole or a further dead hole, and in that said adapting element connects the worm-helical gear reducer to a drive unit.

The main advantage of a reducer in accordance with the present invention lies in the mechanical element of the drive unit and the worm of the reducer being connected maintaining a constant reference dead hole diameter for a given series of mechanical element diameters, and simply varying the diameter of the adapting element according to the diameter of the drive unit mechanical element.

A further advantage of the present invention is the drastic reduction in the number of types of reducers to be kept in stock. That is, reducers with one dead hole diameter for a whole series of drive unit mechanical element diameters may be produced at a central plant, and the adapting elements - which may vary widely from one place to another, depending on specific user requirements and possibly also different regulatory standards - may be produced locally.

In one particular embodiment of the present invention, the adapting element is connected to the dead hole in the worm shaft by means of a splined or lobed coupling.

Further advantages of the reducer according to the present invention lie in the increased diameter of the reference hole for a given standard series resulting in an increase in the diameter of the worm shaft, and hence in an increase in the overall diameters of the end bearings. Both economic and technical advantages are therefore to be gained by using straightforward ball bearings as opposed to high-cost roller bearings.

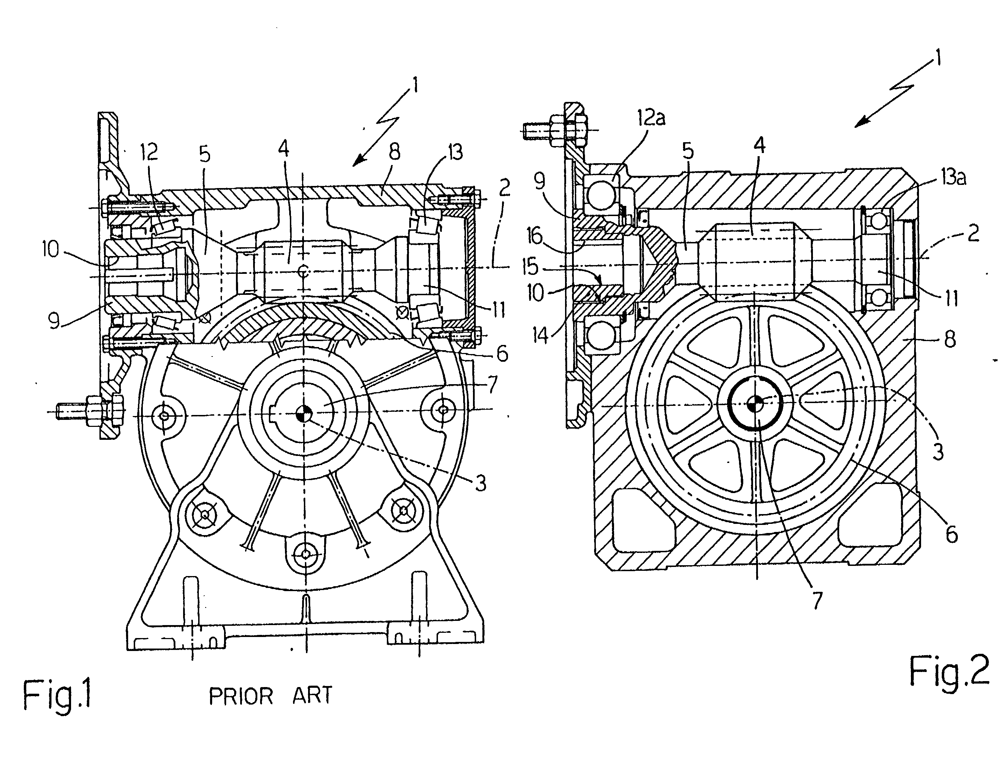

Figure 1 shows a schematic front view, with parts removed for clarity, of a known worm-helical gear reducer.

A number of non-limiting embodiments of the present invention, on the other hand, will be described by way of example with reference to Figures 2-7, in which:
Figure 2 shows a schematic front view, with parts removed for clarity, of a worm-helical gear reducer in accordance with the teachings of the present invention;
Figures 3 and 4 show schematic front views, with parts removed for clarity, of variations of an adapting element of the Figure 2 reducer;
Figure 5 shows a schematic front view, with parts removed for clarity, of a number of embodiments of an adapting element for connecting the reducer according to the invention to different types of user devices;
Figure 6 shows a schematic front view, with parts removed for clarity, of two possible embodiments of the reducer according to the present invention.

Number 1 in Figure 1 indicates as a whole a known worm-helical gear reducer for transmitting motion between two oblique perpendicular axes 2 and 3. Reducer 1 comprises a worm 4 having a first shaft 5 coaxial with axis 2; and a helical gear 6 fitted to a second shaft 7 coaxial with axis 3. Worm 4 and helical gear 6, together with respective shafts 5 and 7, are substantially housed inside a casing 8; a first end 9 of first shaft 5 has a dead hole 10 to which is connected, normally by means of at least one key, a mechanical element (not shown in Figure 1) of a drive unit (not shown in Figure 1); and a second end 11 defining the output end of reducer 1 may be used as a power take-off to activate a further cascade-connected element (e.g. a second reducer, a detecting instrument, a pulley - not shown in Figure 1).

The normal practice in industry is for each worm 4/helical gear 6 reduction ratio to correspond to a given number of standard-diameter dead holes 10 to which are connected, as stated, respective mechanical elements of the drive unit.

As shown in Figure 1, reducers of this type feature conical bearings 12, 13 at ends 9, 11 of shaft 5.

Number 1 in Figure 2 indicates as a whole a worm-helical gear reducer for transmitting motion between two oblique perpendicular axes 2 and 3. Reducer 1 comprises a worm 4 having a first shaft 5 coaxial with axis 2; and a helical gear 6 fitted to a second shaft 7 coaxial with axis 3. Worm 4 and helical gear 6, together with respective shafts 5 and 7, are substantially housed inside a casing 8; and a first end 9 of first shaft 5 has a dead hole 10, which is engaged by a substantially cylindrical adapting element 14 for adapting dead hole 10 to a mechanical element (not shown in Figure 2) by which to connect reducer 1 to a drive unit (not shown in Figure 2). Dead hole 10 and element 14 may advantageously be connected by means of a splined coupling, as shown in Figure 2, or, according to a further variation (not shown), by means of a lobed coupling.

Again with reference to Figure 2, element 14 is substantially housed inside dead hole 10, and has a through hole 15, and a seat 16 for receiving a key (not shown in Figure 2) by which to connect element 14 to the mechanical element (not shown in Figure 2) connecting reducer 1 to a drive unit (not shown in Figure 2).

Since, to accommodate very large-diameter dead holes 10, the diameter of first shaft 5 must also be sized accordingly, the conical bearings 12, 13 in Figure 1 may be replaced by ball bearings 12a, 13a, which are cheaper and easier to assemble.

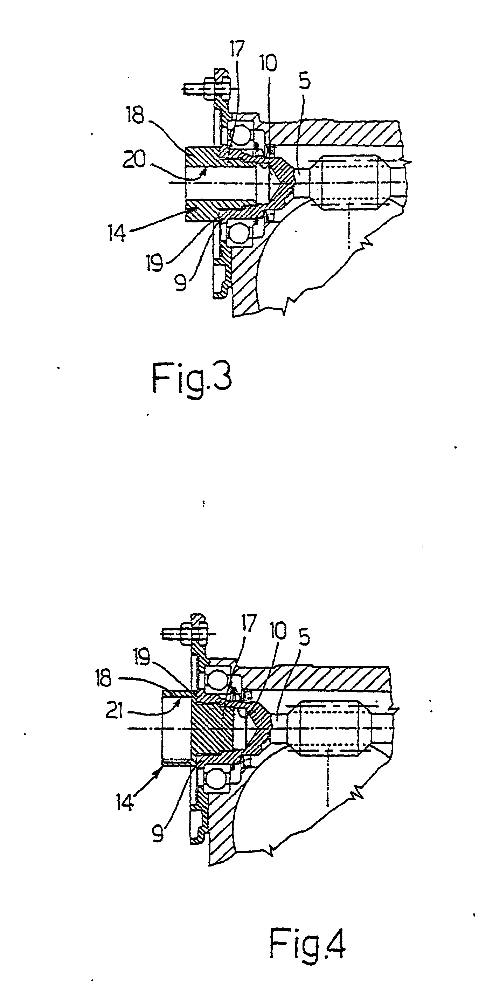

Element 14 may be formed in various ways, some of which are shown in Figures 3 and 4.

In the embodiments shown, element 14 comprises a first portion 17 substantially housed in dead hole 10; and a projecting second portion 18 extending outside dead hole 10. Portions 17 and 18 are separated by a shoulder 19, which, as shown in Figures 3 and 4, may act as a mating surface between element 14 and first end 9 of first shaft 5.

In the Figure 3 embodiment, second portion 18 has an outside diameter larger than the nominal diameter of dead hole 10; and element 14 has a through hole 20 by which to connect element 14 to a male mechanical element (not shown in Figure 3) secured by a key.

In the Figure 4 embodiment, second portion 18 is larger in diameter than the nominal diameter of dead hole 10, and comprises a cavity 21 larger in diameter than the nominal diameter of dead hole 10, and for receiving a male mechanical element (not shown in Figure 4) secured by a key.

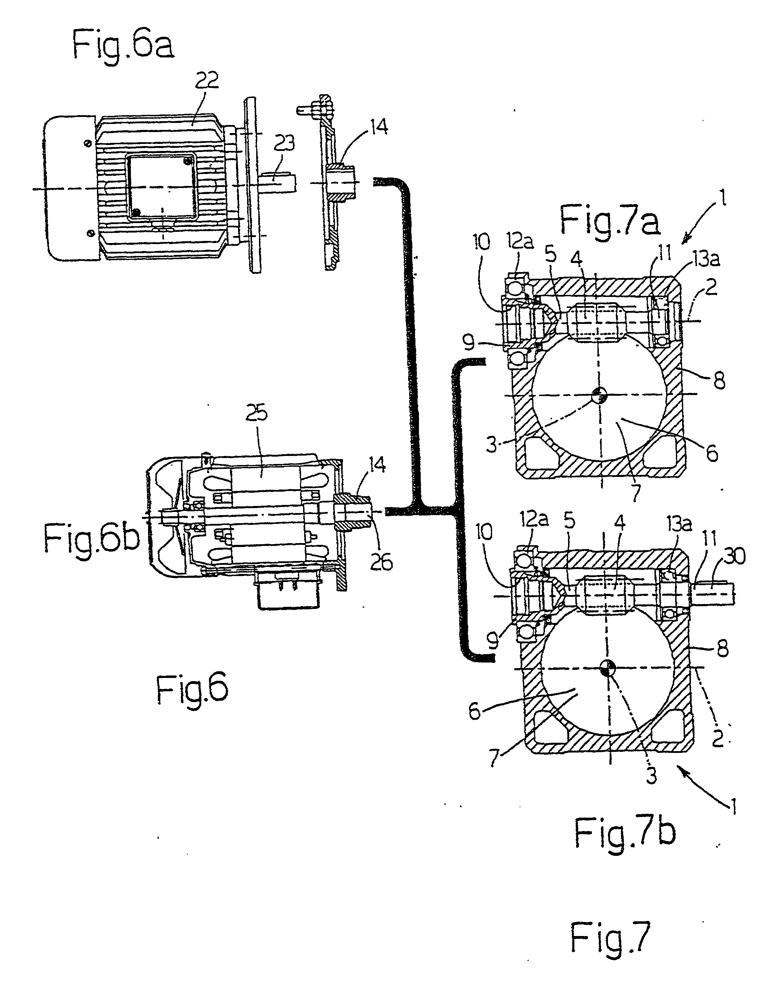

The various embodiments of element 14 therefore provide for connecting reducer 1 according to the present invention to mechanical elements of different drive units, as shown in Figure 6.

More specifically, Figure 6 shows various embodiments of adapting element 14 for use with different types of user devices.

Figure 6a shows the Figure 2 element 14 used to connect reducer 1 to a conventional electric motor 22, which, in this case, is connected mechanically to element 14 by a shaft 23 projecting with respect to the main body of electric motor 22.

Figure 6b shows the Figure 3 element 14 connected to a motor 25. In the embodiment shown, element 14 is fitted to the output shaft 26 of motor 25. Elements 14 in Figures 6a, 6b may in turn be connected to reducers 1 in Figure 7a and in Figure 7b, which differs from the Figure 7a reducer by first shaft 5 comprising a projecting extension 30 for connection to a cascade-connected second element (not shown in Figures 7a, 7b).

As opposed to being the output end, second end 11 of the Figure 7b reducer may obviously act as the input end. That is, the functions of ends 9 and 11 may be inverted by connecting second end 11 to a drive unit, and connecting first end 9 to a further user element by means of the element 14.

Connection of the Figure 7a reducer 1 to the Figure 6b motor 25 is especially advantageous by forming a so-called compact motor reducer, the main advantage of which lies in ball bearing 12a of reducer 1 serving both shaft 26 of motor 25 and first shaft 5 of reducer 1, thus simplifying the structure and reducing the size of the motor reducer.

Operation of the reducer according to the present invention is clearly understandable from the foregoing description with no further explanation required.

## Claims

1. A worm-helical gear reducer (1) comprising a worm (4) having a first shaft (5), and a helical gear (6) fitted to a second shaft (7); said worm (4) meshing with said helical gear (6); said first shaft (5) having a dead hole (10) at a first end (9); and the worm (4) being connectable at said dead hole (10) to a mechanical element; said dead hole (10) being a single reference hole for a given series of diameters of said mechanical element; and an adapting element (14) being interposed between said dead hole (10) and said mechanical element, the worm-helical gear reducer (1) being **characterized in that** the adapting element (14) is housed at least partially inside said dead hole (10) and has a trough hole (20) or a further dead hole (21), and **in that** said adapting element (14) connects the worm-helical gear reducer (1) to a drive unit.

2. A reducer (1) as claimed in Claim 1, wherein said dead hole (10) and said adapting element (14) are connected by means of a splined coupling.

3. A reducer (1) as claimed in Claim 1, wherein said dead hole (10) and said adapting element (14) are connected by means of a lobed coupling.

4. A reducer (1) as claimed in one of the foregoing Claims from 1 to 3, wherein the adapting element (14) comprises a projecting portion (18) substantially outside said dead hole (10) and connectable to a male mechanical element.

5. A reducer (1) as claimed in Claim 1, wherein said first shaft (5) comprises, at a second end (11), a projecting element (30) projecting with respect to said second end (11) of said first shaft (5).

6. A reducer (1) as claimed in Claim 5, wherein said projecting element (30) is connectable to a further drive unit.

7. A reducer (1) as claimed in Claim 1, wherein a bearing (12a) at a first end (9) of said first shaft (5) is used as a bearing (12a) for supporting a shaft (26) of a motor (25), so that said reducer (1) and said motor (25) combine to form a compact motor reducer.

## Patentansprüche

1. Schnecken-/Schrägverzahnungs-Untersetzungsgetriebe (1), umfassend:
eine Schnecke (4) mit einer ersten Welle (5), und ein schräg verzahntes Zahnrad (6), das auf einer zweiten Welle (7) befestigt ist; wobei die genannte Schnecke (4) mit einem schräg verzahnten Zahnrad (6) kämmt; wobei die erste Welle (5) ein Sackloch (10) an einem ersten Ende (9) aufweist; und wobei die Schnecke (4) durch das genannte Sackloch (10) an ein mechanisches Element anschließbar ist; wobei das genannte Sackloch (10) ein einzelnes Referenzloch für eine gegebene Serie von Durchmessern des genannten mechanischen Elementes ist; und ein Anpassungselement (14), das zwischen das genannte Sackloch (10) und das genannte mechanische Element eingefügt ist, wobei das Schnecken-/Schrägverzahnungs-Untersetzungsgetriebe (1) **dadurch gekennzeichnet ist, dass** das Anpassungselement (14) mindestens teilweise innerhalb des genannten Sackloches (10) untergebracht ist und ein Durchgangsloch (20) oder ein weiteres Sackloch (21) aufweist, und dass das genannte Anpassungselement (14) das Schnecken-/Schrägverzahnungs-Untersetzungsgetriebe (1) an einer Antriebseinheit anschließt.

2. Untersetzungsgetriebe (1) nach Anspruch 1, bei dem das genannte Sackloch (10) und das genannte Anpassungselement (14) durch eine verkeilte Kupplung miteinander verbunden sind.

3. Untersetzungsgetriebe (1) nach Anspruch 1, bei dem das genannte Sackloch (10) und das genannte Anpassungselement (14) durch eine radial segmentierte Kupplung miteinander verbunden sind.

4. Untersetzungsgetriebe (1) nach einem der vorhergehenden Ansprüche 1 bis 3, bei dem das Anpassungselement (14) einen vorstehenden Abschnitt (18) im Wesentlichen außerhalb des genannten Sackloches (10) und anschließbar an ein vorstehendes mechanisches Element aufweist.

5. Untersetzungsgetriebe (1) nach Anspruch 1, bei dem die erste Welle (5), an einem zweiten Ende (11), ein vorragendes Element (30) aufweist, das in Bezug auf das genannte zweite Ende (11) der genannten ersten Welle (5) vorsteht.

6. Untersetzungsgetriebe (1) nach Anspruch 5, bei dem das vorragende Element (30) an eine weitere Antriebseinheit anschließbar ist.

7. Untersetzungsgetriebe (1) nach Anspruch 1, bei dem ein Lager (12a) an einem ersten Ende (9) der genannten ersten Welle (5) als Lager (12a) zum Tragen einer Welle (26) des Motors (25) benutzt wird, so dass sich das genannte Untersetzungsgetriebe (1) und der genannte Motor (25) vereinigen, um ein kompaktes Motor-Untersetzungsgetriebe zu bilden.

## Revendications

1. Un réducteur à vis sans fin et engrenage hélicoïdale (1) comprenant une vis sans fin (4) présentant un premier arbre (5) et un engrenage hélicoïdal (6) monté sur un second arbre 7 ; ladite vis sans fin (4) engrenant avec ledit engrenage hélicoïdal (6) ; ledit premier arbre (5) présentant un trou borgne (10) à une première extrémité (9) ; et la vis sans fin (4) pouvant être reliée au niveau dudit trou borgne (10) à un élément mécanique ; ledit trou borgne (10) étant un trou de référence unique pour un série déterminée de diamètre dudit élément mécanique ; et un élément d'adaptation (14) étant interposé entre ledit trou borgne (10) et ledit élément mécanique, le réducteur à vis sans fin et engrenage hélicoïdal (1) étant **caractérisé en ce que** l'élément d'adaptation (14) est logé au moins partiellement à l'intérieur dudit trou borgne (10) et présente un trou traversant (20) ou une autre trou borgne (21), et ce que ledit élément d'adaptation (14) relie le réducteur à vis sans fin et engrenage hélicoïdal (1) à une ensemble d'entraînement.

2. Un réducteur (1) tel que revendiqué à la revendication 1, dans ledit trou borgne (10) et ledit élément d'adaptation (14) sont reliés au moyen d'un couplage cannelé.

3. Un réducteur (1) tel que revendiqué à la revendication 1, dans lequel ledit trou borgne (10) et ledit trou élément d'adaptation (14) sont reliés au moyen d'un couplage lobé.

4. Un réducteur (1) tel que revendiqué dans une des revendications 1 à 3 précédentes, dans lequel l'élément d'adaptation (14) comprend une partie en saillie (18) sensiblement à l'extérieur dudit trou borgne (10) et pouvant être relié à un élément mécanique mâle.

5. Un réducteur (1) tel que revendiqué à la revendication 1, dans lequel ledit premier arbre (5) comprend, au niveau d'une seconde extrémité (11), un élément en saillie (30) faisant saillie par rapport à ladite seconde extrémité (11) dudit premier arbre (5).

6. Un réducteur (1) tel que revendiqué à la revendication 5, dans lequel ledit élément en saillie (30) peut être relié à une autre ensemble d'entraînement.

7. Un réducteur (7) tel que revendiqué à la revendication 1, dans lequel un palier (12a) au niveau d'une première extrémité (9) dudit premier arbre (5) est utilisé en tant que palier (12a) pour supporter un arbre (26) d'un moteur (25), de sorte que le réducteur (1) et ledit moteur (25) se combinent pour former une moto-réducteur compact.
